# EUROPEAN PATENT APPLICATION

(11) **EP 3 150 656 A1**
(43) Date of publication of application: **05.04.2017**
(21) Application number: 15800110.7
(22) Date of filing: 29.05.2015
(51) Int. Cl.: C08J 3/12, C08J 7/12, C08F 2/00, C08F 8/00, C08F 10/00, C08L 101/02

(54) **AMPHIPHILIC ANISOTROPIC POWDER AND METHOD FOR MANUFACTURING SAME**

(30) Priority: 30.05.2014 KR 20140066003; 14.05.2015 KR 20150067650
(71) Applicant: Amorepacific Corporation, Seoul 140-777 (KR)
(72) Inventor: NAM, Jin, Yongin-si Gyeonggi-do 446-729 (KR); KIM, Youngsun, Yongin-si Gyeonggi-do 446-729 (KR); AN, Soon Ae, Yongin-si Gyeonggi-do 446-729 (KR); KANG, Byung Young, Yongin-si Gyeonggi-do 446-729 (KR); HAN, Sang Hoon, Yongin-si Gyeonggi-do 446-729 (KR)
(74) Representative: Agasse, Stéphane
(86) International application number: PCT/KR2015/005430
(87) International publication number: WO 2015/183040

(57) **Abstract**

Disclosed are an amphiphilic anisotropic powder and a method for manufacturing the same. In an aspect, the technique disclosed in the present specification has an effect of providing an amphiphilic anisotropic powder which simultaneously maximizes chemical interface activity and physical interface activity by controlling amphiphilic property, which is the characteristic of an existing surfactant, and geometric property, which is the characteristic of powder macroparticles. In another aspect, the technique disclosed in the present specification has an effect of providing a method for manufacturing an amphiphilic anisotropic powder, which can be mass-produced due to a simple method and an excellent yield and of which the particle size can be controlled to about 100 to about 2500nm.

## Description

### [Technical Field]

The present disclosure relates to amphiphilic anisotropic powder and a method for preparing the same.

### [Background Art]

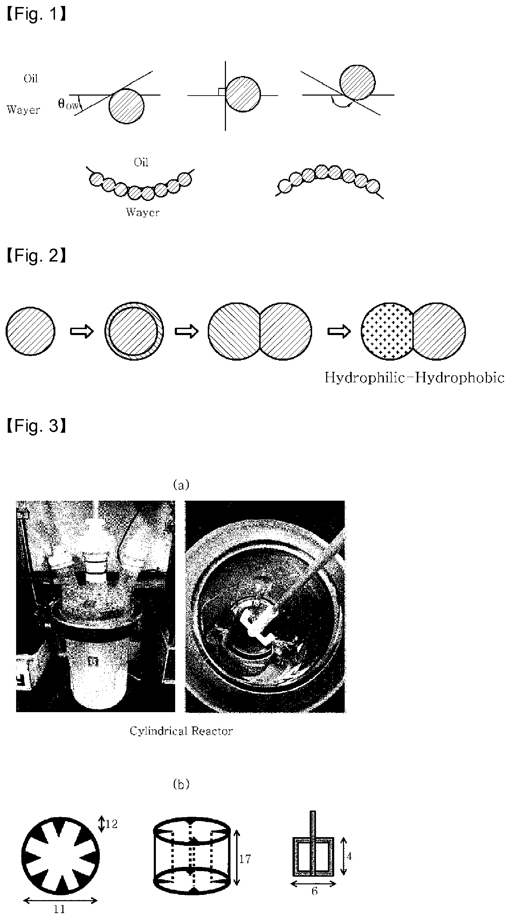

There have been reported various methods for preparing fine particles (nano-size or micro-size particles) having various shapes and sizes. Particularly, spherical fine particles including polymers allow control of size and shape depending on methods for preparing the same, and thus their applicability have been extended. As one of their applications, there is a Pickering emulsion using fine spherical particles to form stabilized macroemulsion particles (Fig. 1). There is a difference in contact angle (θ) between an aqueous phase and oil phase depending on hydrophilicity/hydrophobicity of spherical particles, and O/W emulsion particles are formed at θ<90°, while W/O emulsion particles are formed at θ>90°.

Further, there has been an attempt to provide novel anisotropic powder by imparting amphiphilic property to fine spherical particles so that they have hydrophilicity and hydrophobicity at the same time. Particular examples of such an attempt include Janus particles. However, since such particles have a morphological limit due to its spherical shape, chemical anisotropy is limited. In other words, although such particles have morphological anisotropy, they are hydrophobic or hydrophilic as a whole, and thus are limited in chemical anisotropy.

Thus, there has been another attempt to provide anisotropic powder having surface active property by imparting chemical anisotropy in addition to controlling geometrical configuration. However, although amphiphilic anisotropic powder has high applicability, methods for mass production thereof have not yet been developed and industrial mass production of such powder with uniform quality is difficult, resulting in failure of actual industrial application.

Korean Patent Laid-Open No.1997-0025588 is incorporated herein by reference.

### [Disclosure]

### [Technical Problem]

A technical problem to be solved by the present disclosure is to provide amphiphilic anisotropic powder having maximized chemical surface active property and physical surface active property by controlling the geometrical configuration and chemical hydrophilicity thereof.

Another technical problem to be solved by the present disclosure is to provide a method for preparing amphiphilic anisotropic powder that allows mass production by virtue of simplicity and maximized yield.

### [Technical Solution]

In one aspect, there is provided amphiphilic anisotropic powder including a first hydrophilic polymer spheroid and a second hydrophobic polymer spheroid, wherein the first polymer spheroid and the second polymer spheroid are bound with each other in such a manner that one polymer spheroid at least partially penetrates the other polymer spheroid, and the first polymer spheroid has a core-shell structure and the shell includes a functional group.

According to an embodiment, the core of the first polymer spheroid and the second polymer spheroid may include a vinyl polymer and the shell of the first polymer spheroid may include a copolymer of a vinyl monomer with a functional group.

According to another embodiment, the vinyl polymer may be a vinyl aromatic polymer.

According to still another embodiment, the functional group may be a siloxane.

According to still another embodiment, the shell of the first polymer spheroid may further include a hydrophilic functional group introduced thereto.

According to still another embodiment, the hydrophilic functional group may be at least one selected from the group consisting of a carboxylic acid group, sulfone group, phosphate group, amino group, alkoxy group, ester group, acetate group, polyethylene glycol group and a hydroxyl group.

According to still another embodiment, the amphiphilic anisotropic powder may have a symmetric form, asymmetric snowman form or asymmetric reversed snowman form on the basis of the binding portion where the first polymer spheroid and the second polymer spheroid are bound with each other.

According to still another embodiment, the amphiphilic anisotropic powder may have a particle size of 100-2500 nm.

According to yet another embodiment, the amphiphilic anisotropic powder may form macroemulsion particles with a size of 2-200 µm.

In another general aspect, there is provided a method for preparing amphiphilic anisotropic powder, including the steps of: (1) agitating a first monomer with a polymerization initiator to form a core of a first polymer spheroid; (2) agitating the resultant core of the first polymer spheroid with a first monomer, polymerization initiator and a functional group-containing compound to form a coated first polymer spheroid having a core-shell structure; (3) agitating the resultant first polymer spheroid having a core-shell structure with a second monomer and polymerization initiator to provide anisotropic powder in which a second polymer spheroid is formed; and (4) introducing a hydrophilic functional group to the resultant anisotropic powder.

According to an embodiment, in step (1), the first monomer may be mixed with the polymerization initiator at a weight ratio of 100-1000:1.

According to another embodiment, in step (2), the functional group-containing compound may be siloxane-containing (meth)acrylate.

According to still another embodiment, in step (2), the first monomer, polymerization initiator and the functional group-containing compound may be mixed at a weight ratio of 80-98:0.2-1.0:1-20.

According to still another embodiment, in step (3), the second monomer and polymerization initiator may be mixed at a weight ratio of 150-250:1.

According to still another embodiment, in step (3), the second monomer may be mixed in an amount of 40-300 parts by weight based on 100 parts by weight of the first polymer spheroid having a core-shell structure.

According to still another embodiment, in step (4), the hydrophilic functional group may be introduced by using a silane coupling agent and a reaction modifier.

According to still another embodiment, the silane coupling agent may be N-[3-(trimethoxysilyl)propyl]ethylenediamine.

According to yet another embodiment, the reaction modifier may be ammonium hydroxide.

### [Advantageous Effects]

According to the embodiments of the present disclosure, it is possible to provide amphiphilic anisotropic powder having maximized chemical surface active property simultaneously with maximized physical surface active property by controlling the amphiphilic property of a known surfactant and the geometrical property of macropowder particles.

In addition, according to the embodiments of the present disclosure, it is possible to provide a method for preparing amphiphilic anisotropic powder that allows mass production by virtue of simplicity and high yield, and controls the particle size to approximately 100-2500 nm.

### [Description of Drawings]

Fig. 1 is a schematic view showing the mechanism of formation of a Pickering emulsion formulation according to a change in contact angle at the interface of spherical solid powder.
Fig. 2 is a schematic view illustrating the preparation of amphiphilic anisotropic powder according to an embodiment.
Fig. 3 shows a photograph and schematic view of the cylindrical rotary reactor for use in the preparation of amphiphilic anisotropic powder according to an embodiment.
Fig. 4 shows a photographic image (scale bar: 1 µm) of amphiphilic anisotropic powder according to an embodiment taken by an electron microscope and a schematic view of amphiphilic anisotropic powder including a first polymer spheroid and a second polymer spheroid bound with each other.
Fig. 5 is a microscopic image illustrating the emulsification capability and emulsion particles of anisotropic powder depending on the presence/absence of amphiphilic property.
Fig. 6 is a table showing the compounds used as silane coupling agents in Preparation Example 4.

### [Best Mode]

Exemplary embodiments now will be described in detail hereinafter.

As used herein, unless otherwise defined, the term 'substituted' means that at least one hydrogen atom of the functional group disclosed herein is substituted with a halogen (F, Cl, Br or I), hydroxyl group, nitro group, imino group (=NH, =NR, wherein R is a C1-C10 alkyl group), amidino group, hydrazine or hydrazone group, carboxyl group, substituted or non-substituted C1-C20 alkyl group, substituted or non-substituted C3-C30 heteroaryl group, or a substituted or non-substituted C2-C30 heterocycloalkyl group.

As used herein, the term '(meth)acryl' means acryl and/or methacryl.

As used herein, the particle size of amphiphilic powder is determined by measuring the maximum length of powder particles.

In one aspect, there is provided amphiphilic anisotropic powder including a first hydrophilic polymer spheroid and a second hydrophobic polymer spheroid, wherein the first polymer spheroid and the second polymer spheroid are bound with each other in such a manner that one polymer spheroid at least partially penetrates the other polymer spheroid, and the first polymer spheroid has a core-shell structure and the shell includes a functional group.

As used herein, 'spheroid' means a body including a polymer. For example, a spheroid may be a sphere, globoid or oval shape and have a micro-scale or nano-scale long-axis length on the basis of the largest length in the section of body.

According to an embodiment, the core of the first polymer spheroid and the second polymer spheroid may include a vinyl polymer and the shell of the first polymer spheroid may include a copolymer of a vinyl monomer with a functional group.

According to another embodiment, the vinyl polymer may be a vinyl aromatic polymer, such as polystyrene.

According to still another embodiment, the functional group may be a siloxane.

According to still another embodiment, the shell of the first polymer spheroid may further include a hydrophilic functional group introduced thereto.

According to still another embodiment, the hydrophilic functional group may be a negatively charged or positively charged functional group or PEG (polyethylene glycol)-based functional group, and may be at least one selected from the group consisting of a carboxylic acid group, sulfone group, phosphate group, amino group, alkoxy group, ester group, acetate group, polyethylene glycol group and a hydroxyl group.

According to still another embodiment, the amphiphilic anisotropic powder may have a symmetric form, asymmetric snowman form or asymmetric reversed snowman form on the basis of the binding portion where the first polymer spheroid and the second polymer spheroid are bound with each other. The term 'snowman form' means one having the first polymer bound with the second polymer, wherein the first polymer and the second polymer have a different size.

According to still another embodiment, the amphiphilic anisotropic powder may have a particle size of 100-2500 nm. According to still another embodiment, the amphiphilic powder may have a particle size of 100-1500 nm, 100-500 nm, or 200-300 nm. Particularly, the amphiphilic powder may have a particle size of at least 100 nm, at least 200 nm, at least 300 nm, at least 400 nm, at least 500 nm, at least 600 nm, at least 700 nm, at least 800 nm, at least 900 nm, at least 1000 nm, at least 1100 nm, at least 1200 nm, at least 1300 nm, at least 1400 nm or at least 1500 nm, and at most 2500 nm, at most 2400 nm, at most 2300 nm, at most 2200 nm, at most 2100 nm, at most 2000 nm, at most 1900 nm, at most 1800 nm, at most 1700 nm, at most 1600 nm, at most 1500 nm, at most 1400 nm, at most 1300 nm, at most 1200 nm, at most 1100 nm, at most 1000 nm, at most 900 nm, at most 800 nm, at most 700 nm, at most 600 nm, at most 500 nm, at most 400 nm, at most 300 nm or at most 200 nm.

According to still another embodiment, the amphiphilic anisotropic powder may form macroemulsion particles with a size of 2-200 µm. According to yet another embodiment, the amphiphilic powder may form macroemulsion particles with a size of 5-200 µm, 10-100 µm, 10-50 µm, or 25 µm. Particularly, the amphiphilic powder may form emulsion particles with a size of at least 2 µm, at least 5 µm, at least 10 µm, at least 15 µm, at least 20 µm, at least 25 µm, at least 30 µm, at least 40 µm, at least 50 µm, at least 80 µm, at least 100 µm, at least 130 µm, at least 150 µm or at least 180 µm, and at most 200 µm, at most 180 µm, at most 150 µm, at most 130 µm, at most 100 µm, at most 80 µm, at most 50 µm, at most 40 µm, at most 30 µm, at most 25 µm, at most 20 µm, at most 15 µm, at most 10 µm or at most 5 µm.

In the amphiphilic anisotropic powder, the hydrophobic portion and the hydrophilic portion have different orientability each other with respect to the interface, thereby forming macroemulsion particles and providing a formulation having excellent feel of use. According to the related art, it is difficult for a molecular-level surfactant to provide stabilized macroemulsion particles having a particle diameter of several tens micrometers (µm) and the surfactant forms an interface film having a thickness of about several nanometers (nm). On the contrary, the amphiphilic anisotropic powder disclosed herein provides an interface film having a thickness increased to about several hundreds nanometers (nm) and forms a stabilized interface film by virtue of strong binding between powder particles, resulting in significant improvement in emulsion stability.

In another aspect, there is provided a method for preparing amphiphilic anisotropic powder, including the steps of: (1) agitating a first monomer with a polymerization initiator to form a core of a first polymer spheroid; (2) agitating the resultant core of the first polymer spheroid with a first monomer, polymerization initiator and a functional group-containing compound to form a coated first polymer spheroid having a core-shell structure; (3) agitating the resultant first polymer spheroid having a core-shell structure with a second monomer and polymerization initiator to provide anisotropic powder in which a second polymer spheroid is formed; and (4) introducing a hydrophilic functional group to the resultant anisotropic powder.

In steps (1), (2) and (3), the agitation may be rotary agitation. Rotary agitation is preferred, since uniform mechanical mixing is required in addition to chemical modification so as to produce uniform particles. The rotary agitation may be carried out in a cylindrical rotary reactor but is not limited thereto.

Herein, the internal design of a reactor significantly affects formation of powder. In a cylindrical rotary reactor, the dimension and position of baffles, and the spacing of baffles from an impeller significantly affect the uniformity of the resultant particles. It is preferred that the spacing between internal baffles and impeller blades is minimized so as to homogenize the flow and intensity of convection, the reaction solution for powder is introduced to an extent smaller than the blade length, and the rotation speed of impeller is maintained at a high speed. The reactor may be rotated at a high speed of 200 rpm or more, have a ratio of diameter:height of 1-3:1-5, and more particularly, have a diameter of 10-30 cm and a height of 10-50 cm. The dimension may be varied with the reaction capacity. In addition, the cylindrical rotary reactor may be made of ceramic, glass or the like, and may be agitated at a temperature of 50-90°C.

In a cylindrical rotary reactor, a simple mixing process allows production of uniform particles, is a low-energy consuming process requiring low energy, and enables mass production through the maximization of reaction efficiency. According to the related art, a tumbling process in which a reactor itself rotates causes the whole reactor to be inclined at a predetermined angle and rotated at a high speed, and thus requires high energy and limits the dimension of a reactor. Due to the limitation in dimension of a reactor, the output is limited to a low degree of about several hundreds milligrams (mg) to several grams (g), and thus such a tumbling process is not suitable for mass production.

According to an embodiment, the first monomer and the second monomer may be the same or different each other, and particularly may be a vinyl monomer. In addition, the first monomer added in step (2) is the same as the first monomer used in step (1). The polymerization initiators used in each of the steps may be the same or different each other.

According to another embodiment, the vinyl monomer may be a vinyl aromatic monomer. For example, the vinyl monomer may be substituted or non-substituted styrene.

According to another embodiment, the polymerization initiator may be a radical polymerization initiator. Particularly, the polymerization initiator may be a peroxide initiator, azo initiator or a combination thereof. In addition, ammonium persulfate, sodium persulfate and potassium persulfate may be used.

According to another embodiment, in step (1), the first monomer may be mixed with the polymerization initiator at a weight ratio of 100-1000:1. According to still another embodiment, the first monomer may be mixed with the polymerization initiator at a weight ratio of 100-750:1, 100-500:1, or 100-250:1.

In still another aspect, in step (1), a stabilizer is further added in addition to the first monomer and polymerization initiator so that the first monomer, polymerization initiator and the stabilizer may be mixed at a weight ratio of 100-1000:1:0.001-5. The size and shape of powder is determined by controlling the size of the first polymer spheroid in the initial step (1), and the size of the first polymer spheroid may be controlled by the weight ratio of the first monomer, polymerization initiator and the stabilizer. In addition, it is possible to enhance the uniformity of anisotropic powder by mixing the compounds within the above-defined range.

According to still another embodiment, the stabilizer may be an ionic vinyl monomer, particularly sodium 4-vinyl benzene sulfonate. The stabilizer prevents the resultant particles from swelling, and imparts positive or negative charges to the surface of powder to prevent coalescence (binding) of particles electrostatically during the production thereof.

When the amphiphilic powder has a size of 200-250 nm, it is possible to obtain the powder from the first polymer spheroid in which the weight ratio of the first monomer:polymerization initiator:stabilizer is 110-130:1:1-5, particularly 115-125:1:2-4.

In addition, when the amphiphilic powder has a size of 400-450 nm, it is possible to obtain the powder from the first polymer spheroid in which the weight ratio of the first monomer:polymerization initiator:stabilizer is 225-240:1:1-3, particularly 230-235:1:1-3.

Further, when the amphiphilic powder has a size of 1100-2500 nm, it is possible to obtain the powder from the first polymer spheroid in which the weight ratio of the first monomer:polymerization initiator:stabilizer is 110-130:1:0 particularly 115-125:1:0.

Further, amphiphilic powder having an asymmetric snowman form may be obtained from the first polymer spheroid prepared at a weight ratio of the first monomer:polymerization initiator:stabilizer of 100-140:1:8-12, particularly 110-130:1:9-11.

Further, amphiphilic powder having an asymmetric reversed snowman form may be obtained from the first polymer spheroid prepared at a weight ratio of the first monomer:polymerization initiator:stabilizer of 100-140:1:1-5, particularly 110-130:1:2-4.

According to still another embodiment, in step (2), the functional group-containing compound may be siloxane-containing (meth)acrylate, particularly 3-(trimethoxysilyl)propyl acrylate, 3-(trimethoxysilyl)propyl methacrylate, vinyltriethoxysilane, vinyltrimethoxysilane or a combination thereof.

According to still another embodiment, in step (2), the first monomer, polymerization initiator and the functional group-containing compound may be mixed at a weight ratio of 80-98:0.2-1.0:1-20. According to still another embodiment, the first monomer, polymerization initiator and the functional group-containing compound may be mixed at a weight ratio of 160-200:1:1-6-40. The coating degree may be controlled by the weight ratio and the resultant amphiphilic anisotropic powder has a form determined by the coating degree. When the compounds are reacted at the above-defined weight ratio, the coating thickness is increased by about 10-30%, particularly about 20% based on the initial thickness. In this case, powder formation proceeds smoothly without non-powder formation caused by excessively thick coating or multi-directional powder formation caused by excessively thin coating. In addition, mixing within the above-defined weight ratio enhances the uniformity of anisotropic powder.

According to still another embodiment, in step (3), the second monomer and polymerization initiator may be mixed at a weight ratio of 150-250:1. According to still another embodiment, the second monomer and polymerization initiator may be mixed at a weight ratio of 160-250:1, or 170-250:1, or 180-250:1, or 190-250:1, or 200-250:1, or 210-250:1, or 220-250:1, or 230-250:1, or 240-250:1.

According to still another embodiment, in step (3), a stabilizer is added together with the second monomer and polymerization initiator so that the second monomer, polymerization initiator and the stabilizer may be mixed at a weight ratio of 150-250:1:0.001-5. Particular examples of stabilizer are the same as described above. In addition, mixing within the above-defined weight ratio enhances the uniformity of anisotropic powder.

According to still another embodiment, in step (3), the second monomer may be mixed in an amount of 40-300 parts by weight based on 100 parts by weight of the first polymer spheroid having a core-shell structure. Particularly, when the second monomer is used in an amount of 40-100 parts by weight based on 100 parts by weight of the first polymer spheroid having a core-shell structure, asymmetric snowman-type powder is obtained. When the second monomer is used in an amount of 100-150 parts by weight or 110-150 parts by weight, powder of a symmetric form is obtained. When the second monomer is used in an amount of 150-300 parts by weight or 160-300 parts by weight, asymmetric reversed snowman-type powder is obtained. In addition, mixing within the above-defined weight ratio enhances the uniformity of anisotropic powder.

According to still another embodiment, in step (4), the hydrophilic functional group may be introduced by using a silane coupling agent and a reaction modifier, but is not limited thereto.

According to still another embodiment, the silane coupling agent may be at least one selected from the group consisting of (3-aminopropyl) trimethoxysilane, N-[3-(trimethoxysilyl)propyl]ethylenediamine, N-[3-(trimethoxysilyl)propyl]ethylenediammonium chloride, (N-succinyl-3-aminopropyl)trimethoxysilane, 1-[3-(trimethoxysilyl)propyl]urea and 3-[(trimethoxysilyl)propyloxy]-1,2-propanediol, and particularly may be N-[3-(trimethoxysilyl)propyl]ethylenediamine.

According to still another embodiment, the silane coupling agent may be mixed in an amount of 35-65 parts by weight, for example 40-60 parts by weight, based on 100 parts by weight of the anisotropic powder obtained from step (3). Within the above-defined range, hydrophilization may be accomplished adequately.

According to still another embodiment, the reaction modifier may be ammonium hydroxide.

According to yet another embodiment, the reaction modifier may be mixed in an amount of 85-115 parts by weight, for example 90-110 parts by weight, based on 100 parts by weight of the anisotropic powder obtained from step (3). Within the above-defined range, hydrophilization may be accomplished adequately.

According to the related art, there have been attempts to increase the surface active property of spherical powder particles for use in Pickering by imparting amphiphilic surface activity thereto, and one example thereof includes Janus spherical particles. However, such particles are not practically applicable due to their geometrical limit and difficulty in mass production. On the contrary, the method for preparing amphiphilic powder disclosed herein uses no crosslinking agent and thus causes no agglomeration during the process, resulting in high yield and uniformity. In addition, the method disclosed herein uses a simple agitation process and is more amenable to mass production as compared to a tumbling process. Particularly, according to the method disclosed herein, it is possible to carry out mass production of nano-size particles having a size of 300 nm or less in a scale of several tens grams (g) to several tens kilograms (kg).

### [Mode for Invention]

The examples will now be described. It is apparent to those skilled in the art that the following examples are for illustrative purposes only and not intended to limit the scope of the present disclosure.

### Preparation Example 1. Preparation of Polystyrene (PS)-Based First Polymer Spheroid

In an aqueous phase, 40 g of styrene as a monomer, 1.0 g of sodium 4-vinylbenzene sulfonate as a stabilizer and 0.5 g of azobisisobutyronitrile (AIBN) as a polymerization are mixed and allowed to react at 75°C for 8 hours. The reaction is carried out by agitation in a cylindrical rotary reactor, which has a diameter of 11 cm and a height of 17 cm, is made of glass and is rotated at a speed of 200 rpm.

### Preparation Example 2. Preparation of Coated First Polymer Spheroid Having Core-Shell Structure

To 300 g of the polystyrene (PS)-based first polymer spheroid obtained as described above, 50 g of styrene as a monomer, 6 g of TMSPA (3-(trimethoxysilyl) propyl acrylate) and 0.2 g of azobisisobutyronitrile (AIBN) as a polymerization initiator are added and allowed to react at 75°C for 8 hours. The reaction is carried out by agitation in a cylindrical rotary reactor.

### Preparation Example 3. Preparation of Anisotropic Powder

To 24g of the aqueous dispersion of polystyrene-based core-shell (PS-CS) obtained as described above, 40 g of styrene as a monomer, 0.35 g of sodium 4-vinylbenzene sulfonate as a stabilizer, and 0.2 g of azobisisobutyronitrile (AIBN) as a polymerization initiator are added and heated to 75°C to carry out reaction for 8 hours. The reaction is carried out by agitation in a cylindrical rotary reactor.

### Preparation Example 4. Hydrophilization

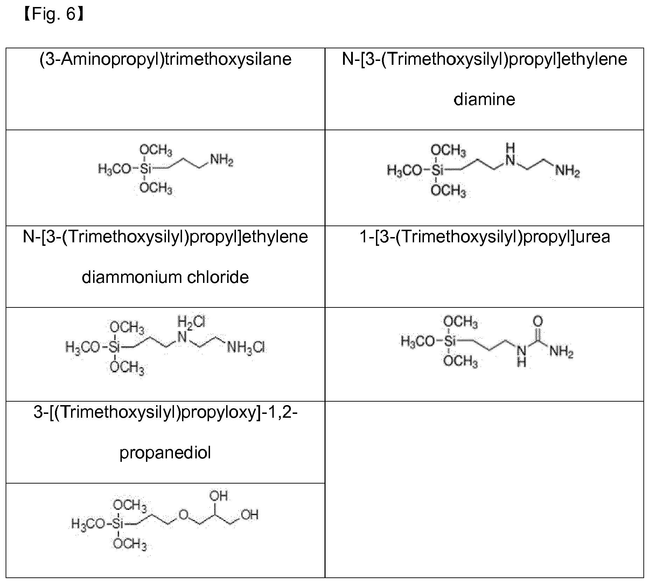

To 600g of the aqueous dispersion of anisotropic powder obtained as described above, 30 g of N-[3-(trimethoxysilyl)propyl]ethylenediamine as a silane coupling agent and 60 g of ammonium hydroxide as a reaction modifier are added and reacted at 25°C for 24 hours to introduce a hydrophilic functional group. The reaction is carried out by agitation in a cylindrical rotary reactor. The compounds used as silane coupling agents are shown in Fig. 6.

### Test Example 1

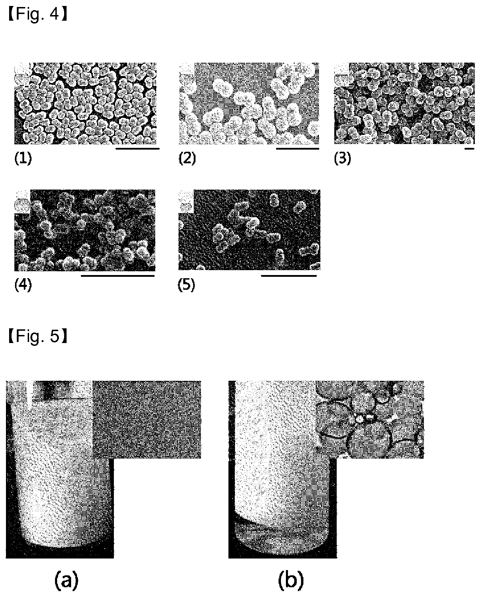

The amphiphilic anisotropic powder obtained as described above is used to provide an emulsion composition and the emulsification capability depending on introduction of a hydrophilic group is shown in Fig. 5. The emulsion composition includes 1 wt% of the anisotropic powder and 20 wt% of diisostearyl maleate based on the total weight of composition.

As a result, Fig. 5 (a) shows the anisotropic powder according to Preparation Example 3 before it is subjected to hydrophilization. It can be seen that emulsion is not formed but powder exists in an aqueous dispersion state. On the contrary, Fig. 5 (b) shows the anisotropic powder according to Preparation Example 4 after it is subjected to hydrophilization. The anisotropic powder after the hydrophilic modification (using N-[3-(trimethoxysilyl)propyl]ethylenediamine) forms macroemulsion particles stably and the emulsion particles move toward the upper layer with time while causing no coalescence.

### Test Example 2

The amphiphilic anisotropic powder obtained by using 30 g of N-[3-trimethoxysilyl]propyl]ethylenediamine as a silane coupling agent and 60 g of ammonium hydroxide as a reaction modifier is observed.

The test is carried out as shown in the following Tables and the results obtained by observing the particle shapes with an electron microscope are shown in Fig. 4 (scale bar: 1 µm). Portions (1)-(5) of Fig. 4 show the images taken by an electron microscope under the reaction conditions as shown in the following Tables. Herein, a shaking reaction tank means a cylindrical rotary reactor, PS means polystyrene-based polymer beads, CS means core-shell beads, and DB means amphiphilic anisotropic powder.

**[Table 1]**

| 1L Reactor Basis Composition (g)-Average Powder Size 250 nm | | | | | |
|---|---|---|---|---|---|
| PS (1L shaking reaction tank) | | CS | | DB | |
| Water | 300 | PS | 300 | CS | 240 |
| MeOH | 40 | Water | 250 | Water | 350 |
| Styrene | 50 | TMSPA | 6 | AIBN | 0.2 |
| KPS | 0.5 | Styrene | 50 | Styrene | 40 |
| SVBS | 1.0 | AIBN | 0.2 | SVBS | 0.35 |

**[Table 2]**

| 1L Reactor Basis Composition (g)-Average Powder Size 450 nm | | | | | |
|---|---|---|---|---|---|
| PS (1L shaking reaction tank) | | CS | | DB | |
| Water | 700 | PS solution | 250 | CS | 200 |
| MeOH | 200 | Water | 200 | Water | 300 |
| Styrene | 130 | TMSPA | 5 | AIBN | 0.1 |
| KPS | 0.6 | Styrene | 30 | Styrene | 20 |
| SVBS | 1 | AIBN | 0.2 | SVBS | 0.2 |

**[Table 3]**

| 1L Reactor Basis Composition (g)- Average Powder Size 1300 nm | | | | | |
|---|---|---|---|---|---|
| PS (1L shaking reaction tank) | | CS | | DB | |
| Water | 420 | PS | 400 | CS | 200 |
| MeOH | 120 | Water | 300 | Water | 290 |
| Styrene | 85 | TMSPA | 5 | AIBN | 0.2 |
| KPS | 0.7 | Styrene | 40 | Styrene | 40 |
| SVBS | 0.5 | AIBN | 0.2 | SVBS | 0.5 |

**[Table 4]**

| 1L Reactor Basis Composition (g)- Snowman Type | | | | | |
|---|---|---|---|---|---|
| PS (1L shaking reaction tank) | | CS | | DB | |
| Water | 600 | PS | 300 | CS | 240 |
| MeOH | 70 | Water | 240 | Water | 350 |
| Styrene | 100 | TMSPA | 6 | AIBN | 0.1 |
| KPS | 0.1 | Styrene | 30 | Styrene | 30 |
| SVBS | 0.8 | AIBN | 0.2 | SVBS | 0.2 |

**[Table 5]**

| 1L Reactor Basis Composition (g)- Reversed Snowman Type | | | | | |
|---|---|---|---|---|---|
| PS (1L shaking reaction tank) | | CS | | DB | |
| Water | 300 | PS | 400 | CS | 200 |
| MeOH | 35 | Water | 300 | Water | 290 |
| Styrene | 50 | TMSPA | 5 | AIBN | 0.4 |
| KPS | 0.4 | Styrene | 40 | Styrene | 70 |
| SVBS | 1.0 | AIBN | 0.25 | SVBS | 0.6 |

| | | | | | |
|---|---|---|---|---|---|
| MeOH: Methanol (cosolvent) KPS: Potassium persulfate (initiator) SVBS: Sodium vinylbenzene sulfonate (stabilizer) PS: Polystyrene (polymer beads) TMSPA: Trimethoxysilyl propyl acrylate (functional group) AIBN: Azobisisobutyronitrile (polymerization initiator) | | | | | |

While the exemplary embodiments have been shown and described, it will be understood by those skilled in the art that various changes in form and details may be made thereto without departing from the scope of this disclosure as defined by the appended claims. Therefore, it is intended that the scope of the present disclosure includes all embodiments falling within the spirit and scope of the appended claims.

## Claims

1. Amphiphilic anisotropic powder comprising a first hydrophilic polymer spheroid and a second hydrophobic polymer spheroid,
wherein the first polymer spheroid and the second polymer spheroid are bound with each other in such a manner that one polymer spheroid at least partially penetrates the other polymer spheroid, and
the first polymer spheroid has a core-shell structure and the shell comprises a functional group.

2. The amphiphilic anisotropic powder according to claim 1, wherein the core of the first polymer spheroid and the second polymer spheroid comprise a vinyl polymer, and the shell of the first polymer spheroid comprises a copolymer of a vinyl monomer with a functional group.

3. The amphiphilic anisotropic powder according to claim 2, wherein the vinyl polymer is a vinyl aromatic polymer.

4. The amphiphilic anisotropic powder according to claim 1, wherein the functional group is a siloxane.

5. The amphiphilic anisotropic powder according to claim 1, wherein the shell of the first polymer spheroid further comprises a hydrophilic functional group introduced thereto.

6. The amphiphilic anisotropic powder according to claim 5, wherein the hydrophilic functional group is at least one selected from the group consisting of a carboxylic acid group, sulfone group, phosphate group, amino group, alkoxy group, ester group, acetate group, polyethylene glycol group and a hydroxyl group.

7. The amphiphilic anisotropic powder according to claim 1, which has a symmetric form, asymmetric snowman form or asymmetric reversed snowman form on the basis of the binding portion where the first polymer spheroid and the second polymer spheroid are bound with each other.

8. The amphiphilic anisotropic powder according to claim 1, which has a particle size of 100-2500 nm.

9. The amphiphilic anisotropic powder according to claim 1, which forms macroemulsion particles with a size of 2-200 µm.

10. A method for preparing amphiphilic anisotropic powder as defined in any one of claims 1 to 9, comprising the steps of:
(1) agitating a first monomer with a polymerization initiator to form a core of a first polymer spheroid;
(2) agitating the resultant core of the first polymer spheroid with a first monomer, polymerization initiator and a functional group-containing compound to form a coated first polymer spheroid having a core-shell structure;
(3) agitating the resultant first polymer spheroid having a core-shell structure with a second monomer and polymerization initiator to provide anisotropic powder in which a second polymer spheroid is formed; and
(4) introducing a hydrophilic functional group to the resultant anisotropic powder.

11. The method for preparing amphiphilic anisotropic powder according to claim 10, wherein the first monomer is mixed with the polymerization initiator at a weight ratio of 100-1000:1, in step (1).

12. The method for preparing amphiphilic anisotropic powder according to claim 10, wherein the functional group-containing compound is siloxane-containing (meth)acrylate, in step (2).

13. The method for preparing amphiphilic anisotropic powder according to claim 10, wherein the first monomer, polymerization initiator and the functional group-containing compound are mixed at a weight ratio of 80-98:0.2-1.0:1-20, in step (2).

14. The method for preparing amphiphilic anisotropic powder according to claim 10, wherein the second monomer and polymerization initiator are mixed at a weight ratio of 150-250:1, in step (3).

15. The method for preparing amphiphilic anisotropic powder according to claim 10, wherein the second monomer is mixed in an amount of 40-300 parts by weight based on 100 parts by weight of the first polymer spheroid having a core-shell structure, in step (3).

16. The method for preparing amphiphilic anisotropic powder according to claim 10, wherein the hydrophilic functional group is introduced by using a silane coupling agent and a reaction modifier, in step (4).

17. The method for preparing amphiphilic anisotropic powder according to claim 16, wherein the silane coupling agent is N-[3-(trimethoxysilyl) propyl]ethylenediamine.

18. The method for preparing amphiphilic anisotropic powder according to claim 16, wherein the reaction modifier is ammonium hydroxide.
